# EUROPEAN PATENT APPLICATION

(11) **EP 2 355 610 A1**
(43) Date of publication of application: **10.08.2011**
(21) Application number: 11275015.3
(22) Date of filing: 21.01.2011
(51) Int. Cl.: H04W 76/04

(54) **Method and system in a wireless network for dynamic adaptation of a state transition timer based on Quality of Service**

(30) Priority: 22.01.2010 GB 1001016
(71) Applicant: Vodafone IP Licensing limited, The Connection Newbury Berkshire RG14 2FN (GB)
(72) Inventor: Fox, David, Newbury, Berkshire RG14 2FN (GB); Chami, Youssef, Newbury, Berkshire RG14 2FN (GB)
(74) Representative: Sneary, Adrian Bernard

(57) **Abstract**

In a telecommunications network including a mobile terminal configured to operate in at least one active state and an idle mode, a network element for, and method of, managing the mobile terminal's duration of operation in the least one active state, which determine a parameter relating to the mobile terminal or a user of the mobile terminal; allocate an state transition timer with a particular duration in dependence upon the parameter; and transition the mobile terminal to a lesser active state or idle mode upon expiry of the state transition timer. The active states are preferably the RRC states of CELL_DCH, CELL_FACH, URA_PCH and CELL_PCH and the parameter is preferably a Quality of Service indication such as subscriber classification.

## Description

### Field of the Invention

The present invention relates to a method and apparatus for use in a telecommunications system. In particular, the present invention relates to a method and apparatus for use in dynamically managing resources of a telecommunications system, for example, a system using UMTS. More specifically, the present invention relates to a method and apparatus for use in the management and/or control of radio resources between the telecommunications network and a mobile terminal. Even more specifically the present invention relates to a method and apparatus for use in the management and/or control of RRC states used between the telecommunications network and a mobile terminal.

### Background

The Universal Mobile Telecommunications System (UMTS) is a third-generation (3G) mobile telecommunications technology. It is standardised by the 3^{rd} Generation Partnership Project (3GPP) and is part of the global ITU IMT-2000 standard. UMTS is multi-service network providing the usual telecommunications services as well as Internet based services over the same network with high bit rates (e.g. 384kbit/s - 84Mb/s).

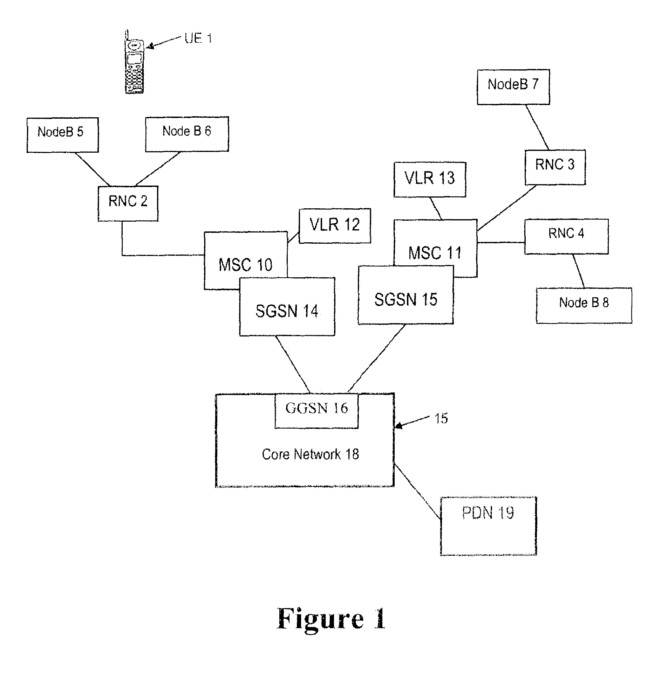

Figure 1 illustrates an example of a known network topology for part of a UMTS communication system. The network includes a number of radio network controllers (2, 3, 4) which interface with one or more Node Bs (5, 6, 7, 8). The Radio Network Controllers (RNCs) are responsible for the control of the radio resources within the network, whilst the Node Bs are the base stations for controlling the signals transmitted to and received from the mobile terminals, such as UE 1.

Node Bs are connected to an RNC via an interface (Iub). This interface between a Node B and an RNC may be a leased line, for example provided by a fixed line telecommunications provider, a microwave link, an Ethernet cable or some other form of communication link. The Node Bs are connected wirelessly to the mobile terminals (e.g. UE 1). The Node Bs and RNCs make up the Radio Access Network component of the UMTS (i.e.UTRAN).

For circuit switched services, the UTRAN routes data via an MSC (10, 11), whilst for packet switched services, data is routed via a Serving GPRS Support Node (SGSN 14, 15).

The design of the mobility in High Speed Packet Access (HSPA) and 3G networks (such as UMTS) is based on a number of states, including the idle state and the active state. When the UE is in idle state, its location is known to the SGSN to a Routing Area granularity level. In this state the UE cannot transmit or receive data. When the UE is in an active state, it is transmitting/receiving data, and its location and context information is known by a serving RNC to either a cell granularity level or a UTRAN Routing Area (URA) granularity.

The transition between idle and active states is either triggered by the UE trying to send data, or by the SGSN paging the device when it receives packets for the UE from a Packet Data Network (PDN 19), such as the Internet. The transition from idle to active state typically takes between 1-3 seconds. This transition is based on the inactivity of that UE for a fixed duration. That is, if the UE is inactive while in the active state for a duration of x seconds, the UE will be forced down to idle to save RAN resources. This decision is typically based upon an Active Release Timer (ART) and the Buffer Occupancy level at the Radio Link Control (RLC) layer.

The UMTS core network 18 is a layered network having a control layer and a connectivity layer or user plane. The division between the control and connectivity layers allows flexible selection of transport technologies.

The UMTS network has been designed to maximise the battery performance of mobile terminals. This is becoming increasingly less of an issue, however, as the network is now being used more and more by mobile broadband (MBB) devices associated with laptops/netbooks and the like. For these devices, the difference in power consumption when in idle state, as well as of the HSPA mode when in the active state and not transmitting data, is small compared to the overall power consumption of the laptop device.

In UMTS, common transport channels that are used to establish and manage communications between the UEs and the core network include the High Speed Downlink Shared Channel (HS DSCH), the Forward Access CHannel (FACH), the Cell Paging Channel (Cell_PCH) and the UTRAN Registration Area Paging Channel (URA_PCH). These channels are shared, and of a finite capacity, and so the network nodes can only maintain a small number of users in active state at any one time. Therefore all UEs are released promptly after not transmitting data for a predetermined set period of time. In this regard, when the UE transmits its last packet of a burst, the network starts an Active State Release timer, which, when expired, is an indication for the RNC to release the UE back to idle state.

Whilst this approach has worked adequately to date, with the increase in mobile phone contracts now commonly including unlimited mobile data access (e.g. web browsing) there is an ever increasing demand being placed on the network resources. Any improvement to maximise or at least increase the network capacity and to better distribute the usage of resources is welcomed.

There is therefore a need to overcome or at least ameliorate at least one such problem of the prior art.

### Summary of the Invention

According to one aspect, the present invention provides, in a telecommunications network including a mobile terminal configured to operate one or more active states and an idle mode, a method of managing the mobile terminal's duration of operation in at least one of the one or more active states including: determining a parameter relating to the mobile terminal or a user of the mobile terminal; allocating a state transition timer with a particular duration in dependence upon the parameter; and transitioning the mobile terminal to a lesser active state or idle mode upon expiry of the state transition timer.

Preferably the determined parameter is a Quality of Service (QoS) parameter, such as a subscriber classification.

Where the parameter is a Quality of Service parameter, this aspect of the invention also preferably includes: determining the number of active users in a predetermined region; determining the quality of service applicable to each of those active users; and determining the particular duration of the state transition timer in dependence upon the quality of service applicable to the mobile terminal as well as the quality of service applicable to the active users.

In this way, by making the state transition timers variable in duration, particularly in dependence upon the active user's quality of service, network latency can be improved, thereby providing a more efficient use of physical resources.

Advantageously, by linking QoS/subscriber class importance with latency, lower priority users are given a lower latency, as compared with higher priority users. The actual latency allowed for each user may also be dependent upon the network resources available. Therefore, by minimising the time delay for lower priority users, network resources may be more quickly returned, thereby increasing the efficiency of network resource usage.

For instance, applying this aspect of the invention enables different timer durations to be applied to different user classes, depending upon the number of UEs in a given region, such as a cell. This is a significant departure from standard techniques which utilise set timer durations for inactivity.

It is to be appreciated that the transitioning of the mobile terminal to a lesser active state is not necessarily wholly dependent upon the state transition timer, and that other factors may also to be taken into consideration, such as the Buffer Occupancy level, indicating whether or not data is waiting to be transmitted.

From the network operator's viewpoint, the timer restriction based upon user QoS assists in minimising excessive under-utilised monopolisation of the radio resources, thereby enhancing the available capacity.

Other aspects of the invention are described in the attached claims.

### Brief Description of the Drawings

The present invention will now be described in more detail with reference to the accompanying Figures in which:
Figure 1 illustrates an exemplary UMTS network configuration, useful in explaining the prior art and embodiments of the invention; and
Figure 2 illustrates a state timing diagram illustrating bursty activity of a mobile terminal compared with the data flow occurring during the different states.

### Detailed Description

As indicated above, advantageously the present invention enables a state transition timer (also known as an Active Release Timer (ART)) associated with a terminal's state to be adjusted dynamically depending upon a parameter relating to the mobile terminal or a user of the mobile terminal, such as the number of mobile terminals in a cell and/or the Quality of Service required by those terminals. To illustrate an embodiment of how this may be implemented, with reference to Figure 1, an example will be provided of the process involved where a UE establishes a network data communication.

The subscriber's mobile device (UE) is shown at 1, which may be any suitable portable device, including a handheld mobile telephone, a personal digital assistant (PDA) or a laptop computer equipped with a network connectivity datacard.

The UE communicates with the core network via the Radio Access Network (RAN), which, for UMTS, the UTRAN is comprised of node Bs (5,6,7,8) and RNCs (2,3,4).

Conventionally, in a UMTS network, the RNCs are arranged in groups and each group of RNCs is controlled by one Serving GPRS Support Node (SGSN), such as SGSN 15 for RNC 3 and RNC 4.

The SGSNs 14 and 15 are provided to support communications in the packet switched domain - such as GPRS data transmissions. The SGSNs 14 and 15 are in turn connected to a gateway GPRS support node (GGSN) 16, a component of the core network, which provides a gateway to packet data networks (PDN) 19, such as the Internet, in order to provide mobile broadband services.

Corresponding Mobile Switching Centres (MSCs) 10 and 11 support communications in the circuit switched domain - typically voice calls. The MSCs function in an analogous way to the SGSNs.

In order to communicate with PDNs, the UE activates a PDP context. The UE may initiate the PDP context activation procedure on its own accord, or after a prompt from the network (such as a paging request). In order to request PDP context activation, the UE sends an "activate PDP context request" to its SGSN. This message typically includes the Network Service Access Point Identifier (NSAPI), PDP type, PDP address (where the UE has a static address), Access Point Name (APN) and the requested Quality of Service (QoS). Upon receiving the request, the SGSN validates the request, and determines the GGSN that can handle the request (typically based upon the APN). With the GGSN determined, the SGSN sends a "create PDP context request" to the GGSN, which includes at least some of the information provided by the UE, as well as a Tunnel Endpoint Identifier (TEID) to be used by the GGSN in the downlink. The GGSN then processes the request, and creates an entry in a PDP Context table, so that, when referred to in the future, all packets transmitted between the GGSN and external PDN can be appropriately routed. The SGSN is notified, via a "Create PDP context response" message, and the UE in turn notified by the SGSN via an "Activate PDP context accept" message. The response message includes a PDP address where one was needed to be dynamically activated.

The GGSN serves as an interface between the radio networks and the IP networks 19. In this regard, once the GGSN establishes a Packet Data Protocol (PDP) session with the appropriate IP network, it thereafter converts the GPRS packets received from the SGSN into the appropriate PDP format (e.g. IP or X.25) and vice versa.

This procedure is implemented every time a UE seeks to initiate a data service, which can amount to anything from sending an MMS or email, accessing the Internet to downloading a sound/video file. Further, a UE may also implement multiple PDP contexts (e.g. to transmit packets from two different services which each have different QoS requirements). For each subsequent PDP context required, a secondary procedure is implemented, which reuses some of the information from the initial or primary PDP context, such as the PDP address.

To control network resources and battery consumption in the terminal, different Radio Resource Control (RRC) active states have been defined in UMTS. These RRC states are typically controlled by the RNC, according to the current UMTS system architecture. However, other network elements in the UTRAN may also be used in the RRC control, such as the SGSN.

In this regard, there are a number of different UMTS RRC states, with varying levels of connectivity depending upon the resources required by the terminal, namely:
a) CELL_DCH ― in this state a dedicated physical channel is allocated to the UE in uplink and downlink. Dedicated transport channels and/or shared transport channels in the uplink and downlink can be used by the UE. The location of the UE is known at a cell level according to its current active set. This is the terminal's state when it is fully active and transmitting/receiving communications;
b) Cell_FACH ― in this state the terminal is able to continuously monitor the FACH (Forward Access Channel) on the downlink (i.e. for any data being transmitted to it, whereupon it can revert to CELL_DCH state). The UE is also assigned a default common or shared transport channel in the uplink (e.g. RACH), that it can use at any time, although no dedicated physical channel is allocated to the UE. The position of the UE is known by the UTRAN at a cell level according to the cell where the UE last made a cell update. The UE is typically dropped to this state once it has not transmitted/received data for a predetermined period of time in the CELL-DCH state. It can also quickly revert to CELL_DCH upon detecting incoming data for it on the FACH, or where the UE needs to transmit data;
c) URA_PCH ― in this state the user terminal is only configured to listen to the paging channel (PCH). The network is aware of the terminal and knows that it is located in a particular cluster of cells, known as a UTRAN Routing Area (URA), but not exactly which cell the terminal is located in. This state is an intermediary state between Cell_FACH and Idle. The UE can revert to CELL_DCH directly from this state, although a greater lead time is required as compared with the CELL_FACH state; and
d) Cell_PCH - in this state the terminal is able to continuously monitor the FACH on the downlink and listen to the PCH. The network is aware of the terminal's location at a cell level according to the cell where the UE last made a cell update. This is an alternative intermediary state between CELL_FACH and Idle. As with URA_PCH, this mode is considered to be a "semi-sleep" mode as no communication is possible, and minimum radio and battery resources are consumed by the UE.

It is to be appreciated that "Idle" mode is not an active state, as when the terminal is in idle mode, the network does not specifically keep any state of the user terminal, and no data transfer is possible. The terminal can only receive cell broadcast information in idle mode.

In Cell_PCH and URA_PCH, when the UE has data to send, it transmits a Cell Update message to the UTRAN, indicating that uplink data is available. Similarly, when the UTRAN has data to send to a UE in CELL_PCH or URA_PCH it needs to send a paging message to the UE, and the UE responds with a Cell Update message to indicate in which cell it is located. These states require less signalling than idle mode to establish the UE for sending/receiving data, as a RRC connection is maintained. Therefore, unlike the idle mode, the UE does not have to establish RRC and signalling connections in order to send/receive data.

By comparison, in CELL_FACH, the UE is able to communicate but with a low data rate and high round trip time due to the properties of the shared channel used in this state. A UE in this state consumes more radio resources compared to CELL_PCH/URA_PCH but less resources than compared to CELL_DCH.

In terms of the channels referred to above:
- The PCH is a downlink transport channel that is used to carry control information to a UE when the network does not know the specific location of the UE;
- The FACH is a downlink transport channel that is used to carry control information to a UE. The FACH allows short messages to be sent from the Node B to the UE, such as control messages to allocate physical resources to the UE, set up dedicated physical channels, etc; and
- The HS-DSCH is a downlink transport channel shared by several UEs and controlled by the Node B. The content of the HS-DSCH is allocated via one or more High Speed Shared Control CHannels (HS-SCCH), which are downlink physical channels that carries higher layer control information for the HS-DSCH.

Therefore, upon or during the establishment of a PDP context, the UTRAN will initiate a bearer establishment mechanism (e.g. in response to a PDP Context Request), and ensure that the UE is in a state able to communicate, by triggering a state change where necessary.

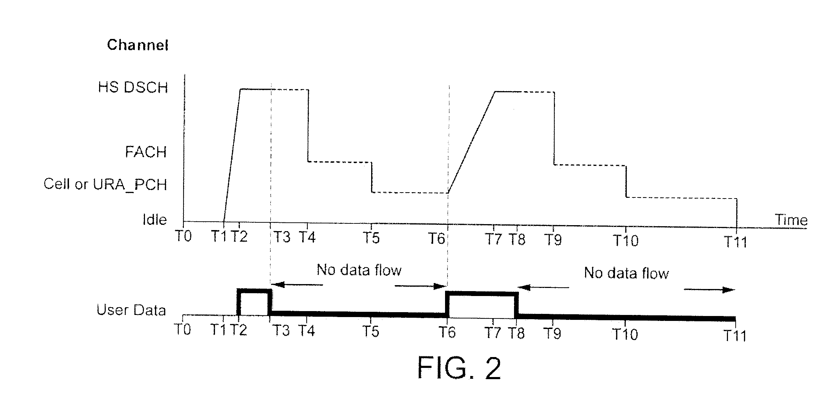

With reference to Figure 2, a timing diagram is illustrated that compares an example UE state transition with data flow for a typical bursty traffic example. At time t=0 (TO), the mobile is in idle mode. At time T1, the UE has data to send (or the UE is notified that data is available), and so sends a PDP Context Request to the UTRAN in order to establish a PDP context as well as RRC and signalling connections. This takes from time T1 to T2, which is typically of the order of 1-3 seconds. In this time the UE has also changed states so that it is now in Cell_DCH and transmitting data to/receiving data from the network via an appropriate channel, such as a High Speed Downlink Shared Channel (HS DSCH). At time T3, all data to be transferred has been transferred, and there is now a lull in traffic between the network and the UE. The UE is maintained in CELL-DCH mode, despite the lull in traffic, however a timer is started, which sets a maximum time period for inactivity in this state. This timer is typically triggered by the buffer being empty, and its duration is fixed and predetermined. In view of the high resource usage in this state, the timer is set for a short period, such as between 5 and 10 seconds.

With reference to Figure 2, the timer expires at time T4, at which time no further data has been transferred to or from the UE. From the User Data comparison graph, it can be seen that user data was only transferred between time T2 and T3. Since no further data has been communicated before the timer expiration, the UE's state is therefore downgraded to CELL_FACH. In this new state, a timer is again initiated in order to set a fixed maximum time for inactivity in this state. Since this state uses fewer resources than CELL_DCH mode, the timer is generally set to a slightly longer time period, such as between 10 and 30 seconds (although a time period measured in minutes is also possible).

At time T5 this timer expires without further UE activity. The UE's state is therefore again downgraded, this time to Cell_PCH or URA_PCH. A further fixed maximum inactivity timer is set for this state, whereby upon its expiry, the UE will be returned to Idle mode. Since these states use minimal resources, a longer fixed time period than used for the previous states may be implemented. For instance, since the states are "semi-sleep" modes, a time period measured in hours (e.g. 1-2 hours) can be used. It is to be appreciated that these states are alternatives, in that there is no direct transition between them. The choice between the two states is typically up to the operator's preference, although URA-PCH state is generally preferred over Cell_PCH as it reduces the signalling load between the UE and the network, which is especially important for "always on" applications, as it allows the UE to move within cells without the burden of a high signalling load.

Referring again to Figure 2, at time T6, data transfer from/to the UE is again instigated, and the UE's state is changed to CELL_DCH or HS-DSCH (shared channel). During this state transfer, from T6 to T7, data transfer is able to take place concurrently, albeit at a lower, but increasing rate (due to the impact the transmission control protocol (TCP) when the data transfer session starts). Alternatively, the network could be configured such that data is not transferred until the state transfer from URA/CELL_PCH to Cell_DCH is completed.

Data transfer continues until time T8. Upon the cessation of data transfer, the state transfer timer with the fixed predetermined inactivity duration for the CELL_DCH or HS-DSCH state is again initiated. It expires at time T9 without further data being transferred. The UE is therefore downgraded to state CELL_FACH and the fixed maximum duration inactivity timer for this state is again set. The timer expires at time T10, and the UE is changed to state URA/CELL_PCH. In this state, the state transfer timer expires at time T11 (without further data transfer), and the UE is returned to Idle mode.

Referring to the graph showing the transfer of user data, between the extensive time period of T0 to T11, data was only actually actively transferred to/from the UE between times T2-T3 and T6-T8, which amounts to only a small proportion of the overall time. It is therefore clear that a lot of time and channel resources are wasted in this RRC state transition procedure, particularly if the traffic is bursty. This is disadvantageous, especially if there are other UEs in the vicinity wanting to access the channel resources, or wanting better QoS than has been allocated to them.

Therefore, according to an embodiment of the invention, a dynamically adjustable state transition timer is utilised in at least one of the UMTS UE states. The dynamically adjustable timer has particular utility to the CELL_DCH and CELL_FACH states, but ideally the dynamically adjustable timer is used for all the active states (i.e. excluding idle).

It is to be appreciated that the adjustment of the timer needs to be based on a balanced consideration of the network's interests (i.e. to release inactive users as quickly as possible since only a small number of users can be maintained in active state at any one time) against the user's interests (i.e. if the UE is released back to idle too quickly after each data transmission, the user will experience excessive delays each time it attempts to view a new page).

Therefore, according to this embodiment of the invention, the state transition timer is dynamically adjusted based upon one or more Quality of Service (QoS) parameters of the users.

Establishing a QoS level for a UMTS bearer requires signalling amongst the UE, RNC, SGSN and GGSN. The QoS signalling is managed during the session set up or during modification, in signalling messages, and in the traffic exchange process. QoS parameters that may be utilised to implement the invention include the UE's traffic or application class or the user's subscriber class.

The subscriber's class is typically allocated by the network provider (i.e. known by the core network). This subscriber classification can be based upon each user's tariff (e.g. corporate, flat rate) or other factors such as their network usage (e.g. download limit exceeded). Therefore, this information can be communicated to the RNC, which manages the radio resources, as part of the PDP context activation procedure.

Therefore, for example, based upon the class of a given user, the RNC may allocate an appropriate timer for one or more of the RRC states. For instance, users may be classified in one of Gold, Silver and Bronze classes, and allocated time periods in dependence upon their classes. Gold class users would be given longer timers than Silver or Bronze class users, for example.

According to a more preferred embodiment of the invention, not only does the RNC consider the user's subscriber classification, but the number of users in each cell is also taken into account. That is, the RNC is configured to check the number of type of active PDP contexts per user class per cell. This check may be performed periodically and/or upon the occurrence of a particular event (e.g. a PDP context being activated/released). As an example, in a given region, such as a cell, if the number of total active gold users is equal to x, silver users equal to y, and the bronze users equal to z, total users a = x+y+z, and if the total available cell resources is smaller than a, therefore the timer per user class is reduced until a maximum number of users can be accommodated.

In one embodiment, the setting of customised timer durations is not utilised until the number of users in a cell exceeds a predetermined threshold. That is, until the threshold is exceeded, all users are allocated a default timer length for each of the states. This threshold user number is chosen taking into account the channel capacity. This threshold is not essential, and customised duration timers may be implemented for each and every user in a cell.

In this regard, to illustrate how the customised duration timers would be implemented in a preferred embodiment of the invention, upon a user requesting a PDP context, a Quality of Service parameter, such as the user's subscriber classification is determined. This information is typically transmitted in the PDP Context Request sent by the mobile terminal or from the core network as part of the PDP context response. It is also checked to determine the number and type of active PDP contexts per cells. The user's QoS parameter is then compared against the current cell situation.

If the user is a high priority user, then they are allocated a state transition timer with the longest duration possible. This duration may be lower than other high priority users in the region/cell if the cell capacity is approaching its upper limit. That is, a sliding scale may be applied to the state transition timer duration, which is dependent upon the number of active users in the cell and/or the QoS required by those active users.

To illustrate an example situation of this embodiment of the invention, where a particular user transitions from one active state (e.g. Cell_DCH) to a lower active state (e.g. Cell_FACH) after expiration of the Cell-DCH state transition timer, if the user again transitions back to Cell_{_}DCH upon having new data to transmit/receive, the state transition timer that is again allocated to the user in the Cell_DCH state the second time around may be different to the previous one allocated. For instance, there may now be a greater number of active users in the cell, and so the RNC is not able to allocate as long a duration to the state transition timer as previously.

According to an alternative embodiment, the RNC pre-calculates the various timer durations for each different active state/QoS class combination. Then, upon determining that a user requesting a PDP context is of a certain class, and certain active state, the appropriate timer value is provided (i.e. on a per QoS class basis). These timer values can be recalculated periodically or as the activity within the cell changes.

In a preferred embodiment, where the number of active users exceeds the available cell resources (or a corresponding predefined threshold), the timers for bronze users will be reduced before gold and silver users. If the timer reduction of bronze users does not result in a sufficient reduction of active users, then the timers for silver users could also be decreased. Alternatively, or in addition, the timers for bronze users may be further reduced to an even lower level. The timer reductions for each class of user may be predefined, or may be determined based upon the degree to which the number of active users in the cell exceed the available cell resources.

Advantageously these embodiments of the invention allow high priority users in particular to be given a larger share of the network resources than other lower priority users, thereby providing them with a better browsing experience. In other words, when a high priority subscriber is active in a cell, the length of the timer can be extended in relation to other subscribers, in order to give further improvements in network latency/reactivity.

The embodiments of the invention described are to be taken also illustrative of the invention and not limitative, in that changes and additions are possible within the inventive concept.

For instance, whilst computing systems for implementing the processing functionality described in the embodiments of the invention are ideally incorporated into the RNC, it may alternatively be incorporated in the NodeB or the GGSN for example.

Additionally, it is to be appreciated that whilst the inventive embodiments have particular application to UMTS networks, and the applicable UMTS RRC states, the present invention may be applied to any other network technologies that manage network resources on the basis of different levels or states. Further the present invention may be applied to any other network technologies that control the duration of different levels or states with timers.

The operations of the various embodiments may be implemented using hardware, software, firmware, or combinations thereof, as appropriate. Furthermore, the order of individual steps in a method claim does not imply that the steps must be performed in this order. Rather, the steps may be performed in any suitable order. In addition, singular references do not exclude a plurality. Additionally, the term 'comprising' does not exclude the presence of other elements or steps.

## Claims

1. In a telecommunications network including a mobile terminal configured to operate in one or more active states and an idle mode, a method of managing the mobile terminal's duration of operation in at least one of the one or more active states including:
determining a parameter relating to the mobile terminal or a user of the mobile terminal;
allocating an state transition timer with a particular duration in dependence upon the parameter; and
transitioning the mobile terminal to a lesser active state or idle mode upon expiry of the state transition timer.

2. The method of claim 1 wherein the parameter is a Quality of Service parameter and the method further includes:
determining the number of active users in a predetermined region;
determining the quality of service applicable to each of those active users;
determining the particular duration of the state transition timer in dependence upon the quality of service applicable to the mobile terminal as well as the quality of service applicable to the active users.

3. The method of any one preceding claim wherein the parameter is a subscriber classification which includes at least a first classification indicating high priority users and a second classification indicating lower priority users, and, for a given active state, users having the first classification are allocated a first state transition timer and users having the second classification are allocated a second state transition timer, such that the first state transition timer has a longer duration than the second state transition timer.

4. The method of any one preceding claim wherein the at least one active state comprises at least one Radio Resource Control (RRC) state, namely CELL_DCH, CELL_FACH, URA_PCH and/or CELL_PCH.

5. The method of any one preceding claim wherein the at least one active state comprises at least two active states, and upon the expiration of a first state transition timer in a first of the at least two active states, the mobile terminal is transitioned to a second of the active states, and the method further includes allocating a second state transition timer in dependence upon the parameter, for the second active state.

6. The method according to any one preceding claim wherein the parameter is determined during a PDP context activation procedure.

7. In a telecommunications network including a mobile terminal configured to operate in at least one active state and an idle mode, a network element for managing the mobile terminal's duration of operation in the least one active state, the network element including a control engine configured to:
determine a parameter relating to the mobile terminal or a user of the mobile terminal;
allocate an state transition timer with a particular duration in dependence upon the parameter, such that upon expiry of the timer, the mobile terminal is changed to a lesser active state or idle mode.

8. The network element of claim 7 wherein the parameter that the control engine is configured to determine is a Quality of Service parameter, and the control engine is further configured to:
determine the number of active users in a predetermined region;
determine the quality of service applicable to each of those active users; and
determine the particular duration of the state transition timer in dependence upon the quality of service applicable to the mobile terminal as well as the quality of service applicable to the active users.

9. The network element of any claim 7 or 8 wherein the parameter that the control engine is configured to determine is a subscriber classification which includes at least a first classification indicating high priority users and a second classification indicating lower priority users, and, for a given active state, the control engine is configured to allocate users having the first classification with a first state transition timer and to allocate users having the second classification with a second state transition timer, such that the first state transition timer has a longer duration than the second state transition timer.

10. The network element of any one of claims 7 to 9 wherein the at least one active state includes a plurality of active states, and the network element is further configured to:
use the parameter to determine an state transition duration application to the mobile terminal for each of the at least one active states; and
determine the mobile terminal's current state; and
allocate an state transition timer to the mobile terminal with an appropriate inactivity duration, in dependence upon the mobile terminal's current state and the parameter, such that upon expiry of the timer, the mobile terminal is transitioned to a lesser active state or idle;
where the mobile terminal is transitioned to the lesser active state, allocating a new state transition timer to the mobile terminal with an inactivity duration dependent upon the parameter and the lesser active state.

11. The network element of any one of claim 10 wherein the network element is configured to determine the mobile terminal's current state from a plurality of Radio Resource Control (RRC) state options, including CELL_{_}DCH, CELL_FACH, URA_PCH and CELL_PCH.

12. The network element according to any one of claims 7 to 11 wherein the network element is configured to determine the parameter from a PDP context activation procedure.

13. The network element according to any one of claims 7 to 12 wherein the network element is a Radio Network Controller (RNC).

14. A network element, such as a Radio Network Controller, configured to perform the method according to any one of claims 1 to 6.

15. A telecommunications network including a network element as claimed in any one of claims 7 to 14.
